# EUROPEAN PATENT APPLICATION

(11) **EP 4 571 925 A1**
(43) Date of publication of application: **18.06.2025**
(21) Application number: 23216863.3
(22) Date of filing: 14.12.2023
(51) Int. Cl.: H01M 10/058, G06N 20/00

(54) **METHOD OF DETERMINING AN ELECTRODE ASSEMBLY FOR A BATTERY CELL**

(71) Applicant: Customcells Holding GmbH, 25524 Itzehoe (DE)
(72) Inventor: Diekmann, Jan, Itzehoe (DE)
(74) Representative: LKGLOBAL Lorenz & Kopf Patentanwalt Attorney at Law PartG mbB

(57) **Abstract**

The invention relates to a method of determining an electrode assembly for a battery cell, the method comprising:
providing a plurality of electrode profiles, each electrode profile being associated with an electrode and comprising measurement data of a manufacturing process of the electrode,
providing a target cell property of the battery cell,
inputting the electrode profiles of the plurality of electrodes and the target cell property into an algorithm, wherein in response the algorithm:
determines an electrode assembly according to which the electrodes are to be assembled

## Description

### FIELD OF THE DISCLOSURE

The present disclosure relates to a method of determining an electrode assembly for a battery cell or any other energy storage device, e.g. a super capacitor.

### BACKGROUND

Batteries play a critical role in modern society, powering a wide range of devices from portable electronics to electric vehicles. Rechargeable batteries, also referred to as secondary batteries, are often preferred due to their reusability.

The increasing demand for portable electronics and electric vehicles has led to a growing need for batteries with higher energy density, longer lifespan (including number of possible charging cycles of a secondary battery), and improved safety. Furthermore, the shift towards renewable energy sources such as solar and wind power has increased the need for energy storage systems, making batteries an essential technology in the transition to a low-carbon economy.

Due to the importance of batteries, there is a high demand to improve the efficiency and lifespan of batteries, including the battery electrodes (i. e. the anode or the cathode) used in the batteries. The quality of the elements used to assemble/manufacture a battery (e.g. its electrodes) can have a critical impact on the performance of the battery. Elements of a low quality can reduce the efficiency or lifespan of the battery. In the worst case, an insufficient quality can lead to a malfunctioning of the battery.

Battery cells are manufactured in a complex process chain, composed of highly specialized processes. Convergent and divergent material flows as well as multiple parameter dependencies link these processes and lead to manifold cause-effect relationships. In general, the process chain is divided into three phases: electrode production (typically batch-wise as a continuous process), cell production (including assembly of one or a plurality of anode-cathode pairs), and cell conditioning (i.e. forming/aging). In particular the manufacturing process of the electrodes is highly complex due to numerous process-structure and structure-performance relationships along the continuous process chain. This leads to undesirable deviations from target criteria, i.e. to variations of the produced electrodes within a batch.

Accordingly, it is necessary to consider production-related tolerances in the cell design. Therefore, in conventional cell production, the battery cells are assigned different quality grades (A, B, C, -grade) after forming/aging (e.g. at an end of line (EoL) testing). Typical quality parameters may comprise a low self-discharge, a low internal resistance, and/or a constant capacity. Accordingly, the quality grades represent the cell performance which is typically negatively influenced by the mentioned tolerances. The tolerances also lead to a decreased production yield, as a certain percentage of produced battery cells is graded as unusable.

Different attempts are known to address this problem. In particular, attempts to move away from expensive trial-and-error operations of production lines, by applying a knowledge-based decision support to improve the quality and throughput of battery production are known.

In this context, Thomitzek et.al. proposes a framework that combines a process chain model and a battery cell model to quantitatively predict the impact of processes on the final battery cell performance, cf.:
Thomitzek, M.; Schmidt, O.; Ventura Silva, G.; Karaki, H.; Lippke, M.; Krewer, U.; Schröder, D.; Kwade, A.; Herrmann, C. Digitalization Platform for Mechanistic Modeling of Battery Cell Production. Sustainability 2022, 14, 1530. https://doi.org/10.3390/su14031530.

The framework proposes coupling of mechanistic process models with a battery cell model within a generic platform concept to describe the impact of individual processes on the structure of the battery cell components and, consequently, on the performance properties of the final battery cells. The framework is applied to a use case in which the sensitivity of process parameters on performance properties are analyzed for the cathode production. The process chain model comprises the process steps of mixing, dispersion, coating, drying, and calendering. The drying process is modeled with a DEM approach and consequently transformed into a meta-model. The performance characteristics as well as the required process parameters are determined for a defined cathode structure. Finally, the sensitivities spanning the different parameter domains are visualized to enable an intuitive analysis of the sensitivities within the process chain and the battery cell.

Implementing the framework and conducting digital experiments allows a targeted decision support for both the product and the production design. Besides identifying the impact of different process parameters on the final battery cell performance, the framework can also be actively employed in product development to determine optimal structural parameters of the electrodes regarding different target criteria (e.g., energy density and robustness), which can then be used as target values for the process chain model.

However, even though the framework proposed by Thomitzek et.al. attempts to more accurately control the process chain, in order to reliably satisfy target criteria of the (predicted) final battery cell, there will still remain an uncertainty in this prediction. In other words, the produced final battery cell will still at least slightly differ from the predicted battery cell due to uncertainties caused by the complexity of the battery production process. Accordingly, production-related tolerances cannot be fully compensated.

Furthermore, US2015311525A1 describes a method for optimizing energy capacity designs for lithium ion batteries that take advantage of the properties of high specific capacity anode active compositions and high specific capacity cathode active compositions. In particular, specific electrode designs are provided for achieving very high energy densities. The document thereby focuses on performance optimization of an individual battery cell.

### SUMMARY OF THE DISCLOSURE

Currently, it remains desirable to overcome the aforementioned problems and in particular to cope with production uncertainties caused by the complexity of the battery production process, such that the production yield and the overall performance of the produced battery cells can be increased.

Therefore, the present disclosure relates to a computer-implemented method of determining an electrode assembly, e.g. for a battery cell, a capacitor or any other type of energy storage device. The method comprises:
providing a plurality of electrode profiles, each electrode profile being associated with an electrode and comprising measurement data of a manufacturing process of the electrode,
providing a target cell property (or a plurality of cell properties) of the battery cell,
inputting the electrode profiles of the plurality of electrodes and the target cell property into an algorithm, wherein in response the algorithm:
   determines (i.e. specifies) an electrode assembly according to which the electrodes are to be assembled.

By providing such a method, a data-driven electrode balancing can be achieved which can be used for cell optimization.

The method may in particular be configured to determine electrode assemblies for a set (or series) of battery cells based on one or a plurality of produced electrode batches. Accordingly, the method allows to optimize the overall yield and cell performance of this produced set by a customized electrode selection and assembly. As a consequence, the proposed method leads to a higher production yield and better performing (i.e. higher graded) battery cells. This is in particular possible, since for each single electrode an electrode profile is provided which comprises measurement data of a manufacturing process of this electrode. Hence, these data can be used for a data-driven electrode balancing process.

The method of the present disclosure is applicable for any type of battery cell, in particular such cells which comprise a plurality of anode-cathode pairs, e.g. in a stack form. Examples include a pouch cell or a prismatic cell. Accordingly, the electrode assembly may have the form of a stack of electrodes (i.e. of electrode sheets).

However, the method is also applicable to assemble and manufacture cylindrical cells which may comprise only one pair of elongated (anode and cathode) electrodes (i.e. electrode tapes). The method may for example be used to select a suitable anode/cathode pair from anode and cathode batches, and/or to arrange these electrodes in an optimized manner (e.g. by adjusting their relative position in a longitudinal direction) as a function of the measurement data of the electrodes and the target cell property. Accordingly, the electrode assembly may also have the form of two rolled-up electrode tapes (i.e. elongated sheets) lying on top of each other.

According to one example, during the manufacturing process of the electrodes, measurement data may be continuously collected with positional accuracy of the electrode tape and/or electrode sheet accuracy. These measurement data may be, in particular, area weight (i.e. surface weight), layer thickness (traversing or localized) and defects. An electrode density (which may also be considered as measurement data, at least indirectly obtained by measurement) may be calculated from the weight per unit area and the layer thickness. The area weight and electrode density may be used to classify the coded electrode sheets. The algorithm may use such measurement data or classifications to create the optimum combination for cell assembly in order to achieve the target cell property (e.g. a specified cell performance or energy-optimized or power-optimized targets). In addition to theoretical values, a database with various combinations of predefined target cell properties may also be used here.

The measurement data of the manufacturing process of the electrode may also comprise measurement data from the raw materials used for manufacturing the electrode.

It is further noted that production related tolerances of electrodes, such as the weight per unit area (i.e. the specific energy (per cm²) and the electrode density), have to be taken into account as chain tolerances in the cell design. This means that the production tolerances usually have even more negative influence on the final cell performance. For this reason it is so difficult (or rather impossible) to eliminate production tolerances to zero.

However, the method of the present disclosure does not require to eliminate manufacturing tolerances to a minimum. Instead, the method allows to cope with these tolerances by an intelligent (i.e. data-driven) electrode balancing process.

The target cell property may be a target requirement of the battery cell, which is e.g. user- or customer-defined. The target cell property may thus be a predefined property.

Instead of a battery cell, also any kind of energy storage device, which contains a plurality of electrodes, may be covered by the method of the present disclosure. Accordingly, the terms "battery cell" or "cell" and "energy storage device" are used interchangeably in the present disclosure.

In the present disclosure the terms "producing" and "manufacturing" are used interchangeably.

An electrode may be an electrode sheet or electrode foil. For example, a manufactured elongated electrode tape may be cut into single electrode sheets.

An electrode assembly may also be referred to as a cell assembly (as the assembled electrodes principally form the assembly of the cell).

Determining the electrode assembly may comprise:
selecting only some of the plurality of electrodes, and
determining an electrode assembly according to which the selected electrodes are to be assembled.

The plurality of electrodes may be provided in one or several batches of manufactured electrodes. Hence, for each battery cell, a suitable selection may be determined out of the one or several batches.

In this way, all or at least a maximum of the electrodes contained by the batches may be attributed to several battery cells. Even if some electrodes might not be used, they might still be added to subsequent batches. If some electrodes are classified as non-usable outliers, they may also be removed from the production process. Anyway, even in this case the total production yield can be increased in view of a conventional method, where complete battery cells must be removed (or at least get a worse grade) due to single electrodes contained in the cells.

Determining the electrode assembly may also comprise: determining an order and/or orientation of the electrodes in the electrode assembly such that an actual cell property of the battery cell approximates (i.e. converges to) the target cell property.

There may be in particular two degrees of freedom for determining the assembly:
determining a sequence (i.e. order) according to which the electrodes are to be arranged (e.g. in a stack), and,
determining a rotation / orientation of each electrode in this arrangement.

The method may in particular comprise sorting the electrodes according to their electrode profiles. In this way a subset of electrodes may be selected consisting of electrodes with a reduced variation (in view of their measurement data) compared to the overall batches.

It is further possible to identify a suitable electrode (out of the subset or out of the batches) for a particular position in the assembly.

For example, in case it is determined based on the measurement data that a particular anode has a relatively high area loading (or optionally electrode coating thickness), this anode may be combined in the assembly with a cathode having also a relatively high area loading (or optionally electrode coating thickness). Accordingly, due to the method of the present disclosure there are no "bad" electrodes anymore in terms of the area loading (or optionally electrode coating thickness). An electrode exceeding acceptable production tolerances, which would conventionally lead to worse or even not useable battery cells, can be balanced by selecting suitable neighboring electrodes in the assembly.

In a further example, if an electrode has different area loadings (or optionally coating thicknesses) on both sides, the electrode assembly may be balanced by adjusting the orientation of this electrode in the assembly (i.e. rotating the electrode such that the thicknesses match with the thicknesses of the neighboring electrodes).

Determining the electrode assembly may also comprise:
classifying the electrodes into a plurality of classes as a function of their respective measurement data, and
determining the electrode assembly as a function of the classes attributed to the electrodes.

The electrode assembly may comprise at least one pair of electrodes being an anode and a cathode, wherein the electrodes of the pair may be optionally selected as a function of their classes, for example such that they have the same class.

The electrodes of the pair may be selected such that their measurement data approximate each other or are within a predefined tolerance range in relation to each other.

For example, the algorithm may comprise a machine-learning based classification model which is trained to predict a class for each electrode. A batch of electrodes may be e.g. sorted into sub-batches according to the different classes. In this way, a battery cell may be assembled using electrodes of matching sub-batches, i.e. an anode sub-batch and a cathode sub-batch having the same class.

The electrodes of the pair may also be selected such that an area loading (or optionally electrode coating thickness) of the anode is greater (i.e. a higher area loading or basis weight) than that one of the cathode, optionally within a predefined tolerance range, e.g. of 5-15%, in a particular example of 10%. In this way the cell performance can be further increased.

The electrode assembly may be at least one of: an electrode stack for a battery cell, and a predefined arrangement of electrodes (e.g. a cylindrical or round cell in the form of a coiled electrode pair). The positioning of the single electrodes in this assembly may be determined by the algorithm.

The target cell property may comprise at least one of:
a predefined cell performance,
a maximum capacity of the battery cell (i.e. a maximization of the capacity), and
a maximum performance of the battery cell (i.e. a maximization of the performance).
The measurement data of the manufacturing process may comprise at least one of:
an electrode basis weight,
an electrode area loading (or surface loading) (e.g. the amount of coated electrode material per surface, and/or a parameter measured in mAh/cm²),
an electrode coating thickness,
an electrode density,
electrode conductivity,
a degree of dispersion of silicon of the electrode, and
an electrode defect.

Generally, the measurement data may be obtained at the end (i.e. the last manufacturing stage) of the manufacturing process of the electrode. However, there may be exceptions, where also the measurement data of an earlier stage may be used, in case these values do not change anymore in the subsequent stages.

The basis weight may be determined e.g. by an X-ray absorption method.

The thickness of the coating layer may be determined by a laser technique.

The algorithm may comprise at least one machine-learning model, optionally a pre-trained and/or fine-tuned machine-learning model. The machine-learning model may for example be a conventional machine-learning model or a deep-learning model, i.e. a (multi-layer) neural network. The model may for example be or comprise one or several conventional machine-learning models, e.g. a random forest or K-nearest neighbor algorithm, and/or a deep-learning model, e.g. an artificial neural network.

The algorithm may be carried out by a processing unit.

The method may further comprise (in particular before providing the electrode profiles and/or during or after the electrode manufacturing process):
determining for each electrode an electrode profile, comprising:
associating an electrode profile for providing characteristics of the electrode with a physical identifier for identifying the electrode,
providing the electrode with the physical identifier,
obtaining measurement data at at least one manufacturing stage of the manufacturing process, and
associating the measurement data with the electrode profile.

Accordingly, the measurement data of the manufacturing process of a particular electrode may be associated with the respective electrode profile.

By providing such a method, it becomes possible to follow-up and/or monitor each single electrode across the manufacturing process. Accordingly, full traceability of each produced (i.e., manufactured) electrode can be achieved, including any electrodes already used in battery cells. Hence, it is possible to determine specific characteristics of produced electrodes, which have been influenced by potential deviations in the manufacturing process.

The method may therefore enable the assignment of e.g., in-line measurement values, such as area weight, coating thickness, geometries, defects, slurry charge, or process anomalies to a physical identifier of an electrode. Said physical identifier may for example be provided on a discrete area on a web-shaped electrode during the production process. In this way, during production of an electrode tape (forming the undivided set of electrodes), quality data may already be assigned to a later piece good (i.e., the separated electrode sheets). As a consequence, full traceability and consistent quality determination can be achieved.

As a further consequence, it becomes e.g., possible to classify the produced and separated electrode sheets according to certain characteristics (e.g., area weight, thickness, etc.) and also to sort out "not good" electrode sheets. These classification labels may be used in the electrode balancing process, as described above.

At the same time, the data obtained can be used to optimize the production process (e.g., for improving single manufacturing stages, and/or to increase the production yield).

Accordingly, the method may allow to generate a digital twin of an electrode tape which may comprise or consist of the (unseparated) set of electrodes. The data of the digital twin may be stored in a database and evaluated if necessary.

Conventional quality assurance measurements are often only carried out sample wise for roll goods, i.e., for an entire electrode tape but not for its single electrodes. In contrast, with the method of the present disclosure, it may be evaluated whether the single electrodes also meet predefined specifications and are thus "good" or qualified parts, even if the manufacturing process is still subject to normal process tolerances. Thus, it can be avoided that "not good" electrodes are used in predefined battery cell. In other words, a predefined, i.e., specified, battery cell may achieve its target parameters (according to its specification) more reliably.

It is however noted, that due to the electrode balancing approach provided by the method of the present disclosure, also electrodes deviating from the target specifications may still be used. Hence, there are even less "not good" electrodes.

The manufacturing process for manufacturing the set of electrodes may be part of a cell manufacturing process for manufacturing a battery cell (or other energy storage device).

Each electrode may have an own and individual physical identifier such that it can be distinguished from other electrodes.

The electrode profile may be a digital electrode profile, e.g., stored on a data storage device or in a database.

The manufacturing process may comprise at least one of the following manufacturing stages:
a mixing stage for preparing an electrode slurry,
a coating stage for coating and drying the electrode slurry on a current collector foil for obtaining an electrode tape,
a calendering stage for roll pressing the electrode tape,
a slitting stage for longitudinally cutting the electrode tape to a predefined size and preparing an electrode tab, and
an electrode separation stage for separating the electrode tape into the set of electrodes.

The method of the present disclosure may be part of the manufacturing process (i.e., manufacturing method or system). However, the present disclosure may also relate to a standalone method, system or product which can be used in connection with a manufacturing process (i.e., manufacturing method or system).

The manufacturing process may be configured for manufacturing at least one first batch of electrodes of an anode type, optionally in form of an electrode tape or strip cut into single electrodes.

The manufacturing process may be further configured for manufacturing at least one second batch of electrodes of a cathode type, optionally in form of an electrode tape or strip cut into single electrodes.

The method may further comprise:
inputting the electrode profiles of the first and second batches and the target cell property into an algorithm, wherein in response the algorithm:
determines one or several electrode assemblies according to which the electrodes of the first and second set are to be assembled.

For example, a produced anode tape and a produced cathode tape may be each separated and packed in respective magazines (which form each a batch).

A magazine may comprise e.g. several hundred electrodes. One or more anode magazines and one or more cathode magazines may be used in the method of the present disclosure to determine a set of battery cells. The assembly of a cell (i.e. of an electrode stack) may be determined by selecting the appropriate anode-cathode pairs.

The present disclosure further relates to a method of manufacturing an electrode assembly (e.g. for a battery cell or another type of energy storage device), the method comprising:
determining the electrode assembly according to any one of the preceding aspects, and
assembling the electrode assembly (i.e. thereby assembling the battery cell).

The present disclosure further relates to an energy storage device comprising an electrode assembly manufactured as described above.

The present disclosure may also relate to a computer program comprising instructions which, when the program is executed by a computer, cause the computer to carry out the method according to any example or aspect of the present disclosure.

The present disclosure further relates to a data storage device for storing an electrode assembly according to which the electrodes are to be assembled to form a battery cell, the electrode assembly being determined according any one of the preceding method claims.

The data storage device for storing may optionally also store a plurality of electrode profiles, each electrode profile comprising measurement data of a manufacturing process of an electrode. These electrode profiles may either comprise all available electrode profiles or only those which have been selected for the determined electrode assembly.

The present disclosure may further relate to the following optional aspects:

The electrode may be provided with a physical identifier during (or at) the coating stage, e.g., after the electrode has been coated and/or before the electrode is passed to the next stage.

Providing the electrode with the physical identifier at the coating stage has the following advantage: It can be difficult to assign a single electrode to a particular position in the electrode tape (e.g., via linear meters), since the lengths of the electrode tape, in particular the length of its coating may vary during manufacturing stages (e.g., may become longer in a calendaring stage). However, by providing the electrode with the physical identifier at the coating stage, any deformation or stretching of the electrode tape during further production stages will not affect the accurate positioning of the physical identifier at the respective electrode. In other words, the position of the physical identifier remains at the position of the respective electrode during the complete manufacturing process, independently from any deformations of the electrode tape. The physical identifier can thus always be accurately assigned to its electrode.

The electrode may be an electrode sheet, e.g., unseparated from other electrodes to form the electrode tape during the manufacturing process, or in a separated form after the manufacturing process.

Accordingly, during the manufacturing process (and before electrode separation), an electrode tape may comprise or consists of the unseparated electrodes (or electrode sheets). The electrode tape may also be referred to as an electrode foil. In other words, the set of electrodes may be unseparated to form an electrode foil or electrode tape.

Providing the electrode with a physical identifier may comprise applying the physical identifier on the electrode by a laser device, which is an example of an identifier device according to the present disclosure.

For example, the physical identifier may be applied (e.g., using inkjet/laser) during the coating stage (e.g., directly after coating) at e.g., an uncoated part of the electrode foil.

For example, the physical identifier may be or may comprise a DMC (data matrix code), which is e.g., lasered. Lasering may have the advantage that it is unforgeable and authenticatable. However, since lasering may weaken the electrode tape, the physical identifier may desirably be applied to an area of the electrode that is not used operatively in the cell.

In general, the term "physical identifier" may mean that this identifier is derivable (e.g., readable) from the (physical) electrode. In contrast, an electronic (i.e., digital) identifier which corresponds to or is assigned to the physical identifier may be used in the electrode profile or be part of the electrode profile.

Accordingly, the physical identifier may contain information which allows identifying the electronic identifier. Moreover, the physical identifier may optionally contain information about the electrode type.

Further examples of measurement data may comprise an offset between the electrodes, a coating offset, information about uncoated areas, coating geometries, and information about detected and/or identified defects of the electrode.

Moreover, an electrode density may be calculated based on the weight per unit area of the electrode and the electrode thickness.

The measurement data may further comprise product parameters of the electrode.

Obtaining measurement data at the at least one manufacturing stage may comprise:
identifying the electrode by scanning the physical identifier at the at least one manufacturing stage.

Accordingly, the physical identifier may be provided before measurements are obtained (or at least simultaneously with obtaining the first measurement data, e.g., at the coating stage), such that the measurements can be assigned to the physical identifier.

For example, at each manufacturing stage a scanner may be used to scan the physical identifier and hence identify the respective electrode. Hence, each manufacturing stage may be equipped with a respective scanner.

Associating the measurement data to the electrode profile may comprise: associating the measurement data to the identified electrode.

The present disclosure further relates to a method of associating measurement data of a cell manufacturing process with a cell profile of a battery cell.

The battery cell may comprise a stack or plurality of electrodes. The method may comprise:
for each electrode performing the method of the present disclosure to obtain the measurement data,
associating the cell profile with a physical cell identifier for identifying the cell,
providing the cell with the physical cell identifier,
associating the electrode profiles of the electrodes with the cell profile.

The cell profile may serve for providing characteristics of the cell.

Accordingly, the physical cell identifier may be assigned to the cell profile which in return is associated with the electrode profiles of the electrodes contained in the cell. The electrode profiles may comprise measurement data of the respective electrodes. As a consequence, by reading the physical cell identifier the measurement data of the electrodes used in the cell may be obtained.

For each electrode a peripheral area comprising the physical identifier of the electrode may be removed.

The electrode of the present disclosure may comprise a physical identifier configured to be associated with an electrode profile according to the present disclosure.

The physical identifier may be positioned in a peripheral area of the electrode.

The peripheral area may be adjacent to an electrode tab of the electrode.

The data storage device may further store at least one of:
measurement data of the manufacturing process associated with a physical identifier according to a method of the present disclosure,
an electrode profile according to a method of the present disclosure, and
a cell profile according to a method of the present disclosure.

The present disclosure further relates to a system for associating measurement data of a manufacturing process with an electrode profile. The manufacturing process comprises a plurality of manufacturing stages. The manufacturing process is configured for manufacturing a set of electrodes. The system comprises:
at least one measurement device configured to obtain measurement data of the electrode at at least one manufacturing stage, and
an identifier device configured to provide the electrode with a physical identifier, and
a data storage device as described above.

The system may further comprise at least one manufacturing device for performing one or several manufacturing stages. Accordingly, the system may in addition be a manufacturing system configured for manufacturing a set of electrodes.

The technology provided by the present disclosure may be applied in various types of batteries such as lithium-ion secondary batteries. Other compatible examples of batteries may be sodium-ion batteries, potassium-ion batteries, magnesium-ion batteries, calcium-ion batteries or aluminum-ion batteries. The technology provided by the present disclosure may also be applied in various types of metal ion capacitors, such as lithium-ion capacitors.

The term battery and battery cell may be used interchangeably in the present disclosure.

It is intended that combinations of the above-described elements and those within the specification may be made, except where otherwise contradictory.

It is to be understood that both the foregoing general description and the following detailed description are exemplary and explanatory only, are provided for illustration purposes and are not restrictive of the disclosure, as claimed.

The accompanying drawings, which are incorporated in and constitute a part of this specification, illustrate examples of the disclosure and together with the description, and serve to support and illustrate the principles thereof.

### BRIEF DESCRIPTION OF THE DRAWINGS

Fig. 1 shows a flowchart of a method 10 of determining an electrode assembly for a battery cell according to examples of the present disclosure.
Fig. 2 schematically shows the process of manufacturing an electrode assembly for a battery cell according to examples of the present disclosure.
Fig. 3 schematically shows the principle of electrode balancing according to examples of the present disclosure.
Fig. 4 shows a flowchart of a method 100 of associating measurement data of a manufacturing process with an electrode profile according to examples of the present disclosure.
Fig. 5 shows a flowchart of a manufacturing process 200 according to examples of the present disclosure.
Fig. 6 schematically shows an example of the manufacturing process 200 of Fig. 5.
Fig. 7 schematically shows an example of a set of electrodes.

### DESCRIPTION OF THE DRAWINGS

Reference will now be made in detail to examples of the disclosure, examples of which are illustrated in the accompanying drawings. Wherever possible, the same reference numbers will be used throughout the drawings to refer to the same or like parts.

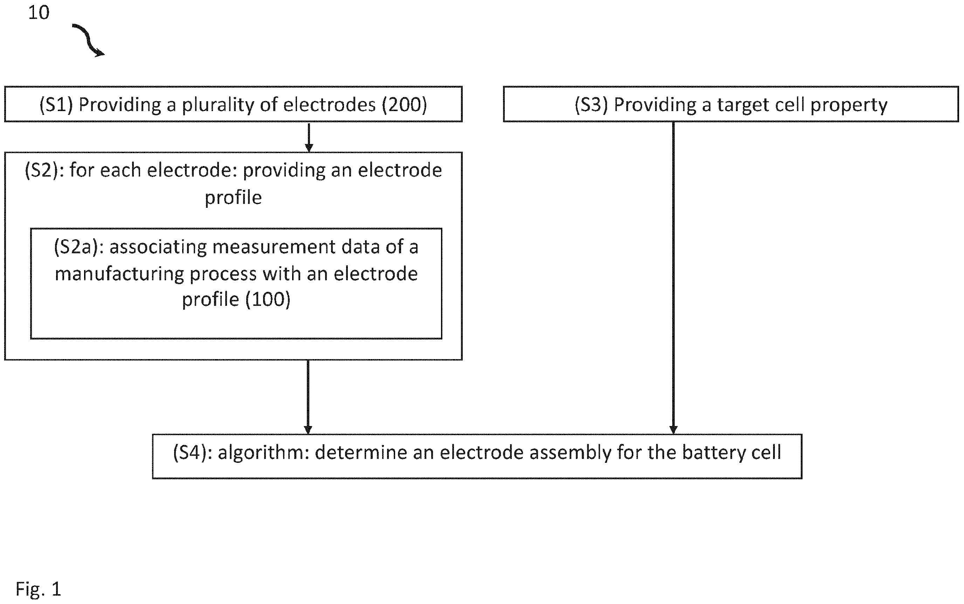

Fig. 1 shows a flowchart of a computer-implemented method 10 of determining an electrode assembly for a battery cell according to examples of the present disclosure.

For example, a processing unit may carry out the method. The processing unit may further comprise or be connected to data which may be included in a system or be external thereto (e.g. provided by a cloud service). The system may further include a memory. In some examples, the processing unit and the memory may be incorporated into the system or may be a computer or computer communicatively linked thereto.

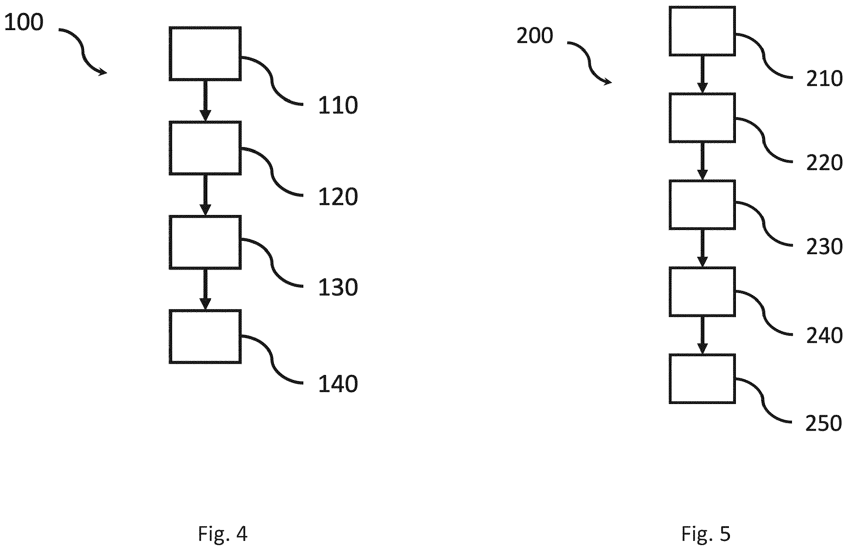

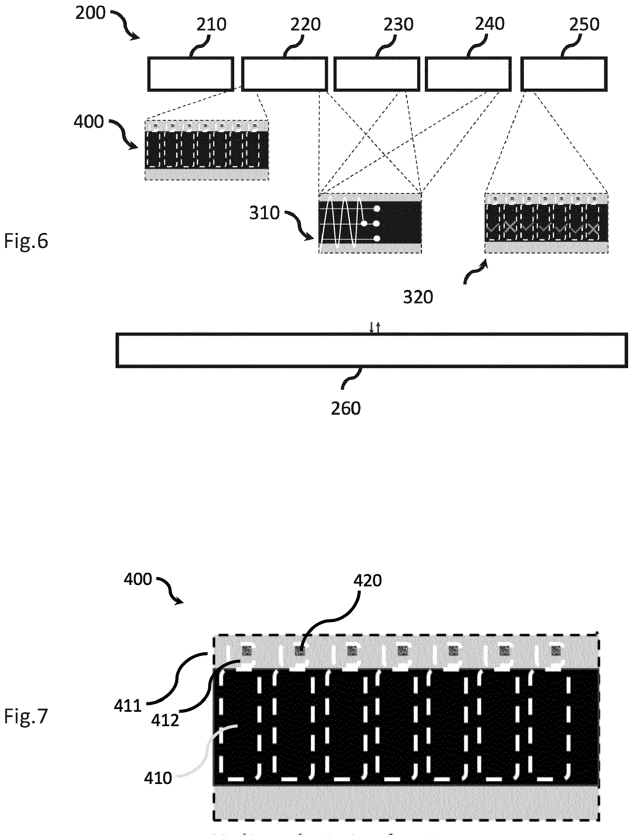

In step S1 a plurality of electrodes is provided. For example, the electrodes may be manufactured in a manufacturing process 200, as described in more detail in context of fig. 5 and 6.

In step S2 each electrode is associated with an electrode profile comprising measurement data of a manufacturing process of the electrode. Step S2 may be based on a step S2a of determining associating measurement data of the manufacturing process with the electrode profile. Steps S2 and S2a are described in more detail in context of method 100, as shown in fig. 4.

It is noted that steps S1 and S2 may also be carried out simultaneously. For the present disclosure it is only relevant that electrode profiles are provided. However, providing the electrodes themselves in a physical manner (i.e. manufacturing the electrodes) is not required.

Independently of steps S1 and S2 (e.g. before, during or after these steps), in a step S3 a target cell property of the battery cell is provided.

In step S4 the electrode profiles and the target cell requirement are input into an algorithm which in response determines an electrode assembly according to which the electrodes are to be assembled. The algorithm may comprise at least one machine-learning model, optionally a pre-trained and/or fine-tuned machine-learning model. The machine-learning model may for example be a conventional machine-learning model or a deep-learning model, i.e. a (multi-layer) neural network. The model may for example be or comprise one or several conventional machine-learning models, e.g. a random forest or K-nearest neighbor algorithm, and/or a deep-learning model, e.g. an artificial neural network. For example, the algorithm may comprise a machine-learning based classification model, as explained below.

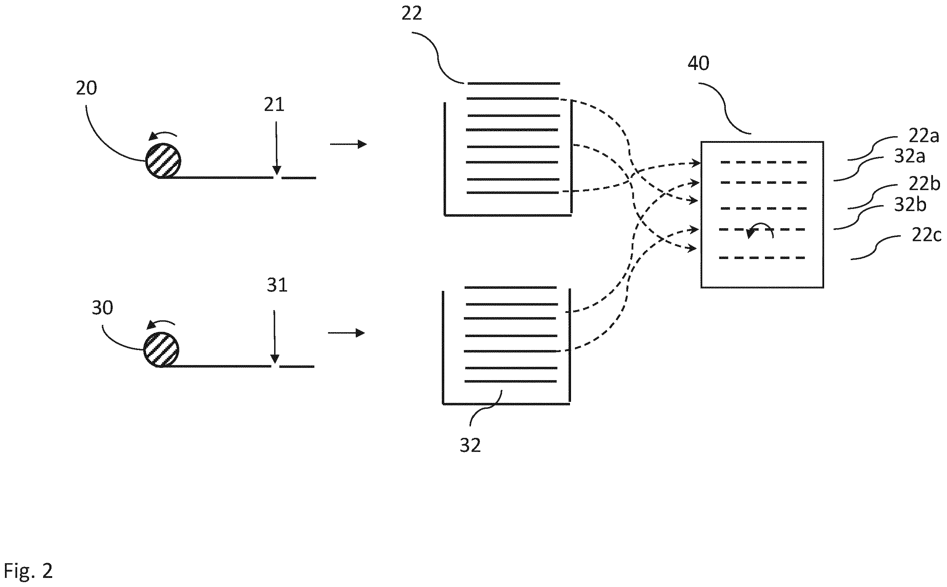

The method is explained in more detail in the following example in context of fig. 2.

Fig. 2 schematically shows the process of manufacturing an electrode assembly for a battery cell according to examples of the present disclosure.

The manufacturing process may be configured for manufacturing at least one first batch of electrodes of an anode type, optionally in form of an electrode tape or strip 20.

The manufacturing process may be further configured for manufacturing at least one second batch of electrodes of a cathode type, optionally in form of an electrode tape or strip cut into single electrodes 30. The electrode tapes 20, 30 may be rolled up.

For example, a produced anode tape and a produced cathode tape may be each separated by respective cutting tools 21 and 31 into single electrode sheets. These electrode sheets may be packed in respective magazines 22, 32 (which each may form a batch). A magazine may comprise e.g. several hundred electrodes. One or more anode magazines and one or more cathode magazines may be used in the method of the present disclosure to determine a set of battery cells.

The electrode assembly 40 of a cell (i.e. of an electrode stack) may be determined by selecting the appropriate anode-cathode pairs 22a, 32a, 22b, 32b, 22c.

The method may in particular comprise sorting the electrodes according to their electrode profiles. In this way a subset of electrodes 22a, 32a, 22b, 32b, 22c may be selected consisting of electrodes with a reduced variation (in view of their measurement data) compared to the overall batches. The electrode sheets may be transported and positioned by vacuum grippers.

It is further possible to identify a suitable electrode in the batch, e.g. electrode 22 for a particular position in the assembly.

The electrodes of the pair may be selected such that their measurement data approximate each other or are within a predefined tolerance range in relation to each other.

For example, the algorithm may comprise a machine-learning based classification model which is trained to predict a class for each electrode. A batch of electrodes may be e.g. sorted into sub-batches (not shown in fig. 2) according to the different classes. In this way, the battery cell, i.e. electrode assembly 40 may be assembled using electrodes of matching sub-batches, i.e. an anode sub-batch and a cathode sub-batch having the same class.

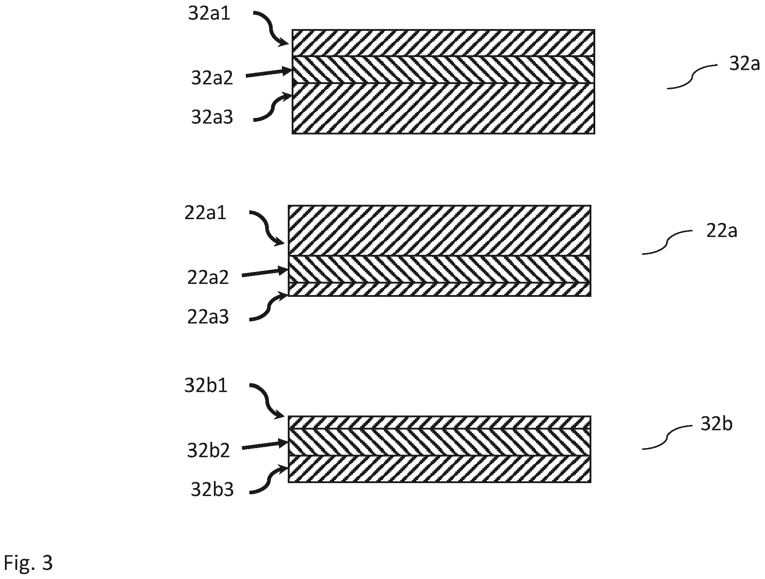

In a further example, if an electrode 32b has different coating thicknesses on both sides, the electrode assembly may be balanced by adjusting the orientation of this electrode in the assembly (i.e. rotating the electrode such that the thicknesses match with the thicknesses of the neighboring electrodes). This principle of electrode balancing is explained in more detail in context of fig. 3.

It is noted that the illustrated example is very schematic and that a battery cell typically comprises more electrodes. Moreover, the schematic example does not show separators in the assembly, even if it is possible and desirable to add separators between adjacent electrodes.

Typically, during stacking, a stack of cells may be formed from an alternating arrangement of anode, separator, cathode, separator etc. to form a cell stack (i.e. stack of electrodes or electrode stack). Such a cell stack may consist of e.g. up to 120 individual layers. Different stacking technologies may be used to produce the cell stack. A possible variant of stacking is so-called Z-folding. In Z-folding, the anode and cathode are inserted into the web-shaped separator from both sides. The Z-shaped arrangement of the separator gives the process its name.

Fig. 3 schematically shows the principle of electrode balancing according to examples of the present disclosure.

In this example an anode 22a comprises a relatively high area loading (i.e. a relatively thick electrode coating 22a1) on a first side and a relatively a relatively low area loading (i.e. thin electrode coating 22a3) on a second side of its current collector foil 22a2.

In this case, this anode 22a may be combined in the assembly with a first neighboring cathode 32a in the stack having also on at least one side a a relatively high area loading (i.e. relatively thick electrode coating 32a3) (the further electrode coating 32a1 may have any thickness in this example).

Moreover, this anode 22a may be combined in the assembly with a second neighboring cathode 32b in the stack having also on at least one side a relatively low area loading (i.e. a relatively thin electrode coating 32b3 (the further electrode coating 32b1 may have any thickness in this example).

Accordingly, the electrode assembly may be balanced such that a high performing battery cell can be obtained, even if overall production tolerances may be relatively high (leading e.g. to the different area loadings or coating thicknesses).

As a further consequence, the overall production yield of the manufacturing process can be increased, as almost any produced electrode of the batches can be efficiently used and almost any produced battery cell can have a relatively high quality grade.

It is noted that this example is very schematic. In particular, the schematic example does not show separators in the assembly. Furthermore, the thicknesses of the shown electrodes and of their layers are schematic and serve merely for explaining the principles of the method of the present disclosure.

Fig. 4 shows a flowchart of a method 100 of associating measurement data of a manufacturing process with an electrode profile according to examples of the present disclosure. The manufacturing process may comprise a plurality of manufacturing stages and is configured for manufacturing a set of electrodes. An example of a manufacturing process 200 is described in context of Fig. 5.

The method may comprise the following steps, which are applied to a set of electrodes, i.e., to each electrode (or electrode sheet) of the set. The set may be an electrode tape consisting of unseparated electrode sheets.

In a first step 110, an electrode profile is associated for providing characteristics of the electrode with a physical identifier for identifying the electrode. Associating the measurement data to the electrode profile may, for example, comprise associating the measurement data to the identified electrode.

In a second step 120, the electrode is provided with the physical identifier. Providing the electrode with a physical identifier may comprise applying the physical identifier on the electrode by a laser device.

In a third step 130, measurement data is obtained at at least one manufacturing stage.

Obtaining measurement data at the at least one manufacturing stage may comprise identifying the electrode by scanning the physical identifier at the at least one manufacturing stage.

In a fourth step 140, the measurement data is associated with the electrode profile.

Fig. 5 shows a flowchart of a manufacturing process 200 according to examples of the present disclosure. The manufacturing process 200 may comprise a set of manufacturing stages. In the manufacturing process (i.e., a method) a set of electrodes may be manufactured (i.e., produced). For example, the set of electrodes may be connected (i.e., not yet separated) electrode sheets forming an electrode tape. Said electrode tape may run through the different stages, such that each of its electrodes is processed in the different manufacturing stages. It is however possible that the electrode tape is wound up on a coil between at least some of the stages.

A first manufacturing stage 210 may be a mixing stage for preparing an electrode slurry.

A second manufacturing stage 220 may be a coating stage for coating and drying the electrode slurry on a current collector foil for obtaining an electrode tape. Each electrode may be provided with a physical identifier during the coating stage 220, e.g., directly after the electrode has been coated.

A third manufacturing stage 230 may be a calendering stage for roll pressing the electrode tape.

A fourth manufacturing stage 240 may be a slitting stage for longitudinally cutting the electrode tape to a predefined size and preparing an electrode tab.

A fifth manufacturing stage 250 may be an electrode separation stage for separating the electrode tape into the set of electrodes (i.e., single electrode sheets).

Fig. 6 schematically shows a further example of a manufacturing process 200, which may be a particular example of the manufacturing process 200 of Fig. 5. The example of Fig. 6 thereby combines the manufacturing process 200 of Fig. 5 with the method of associating measurement data of Fig. 4. Fig. 6 also schematically shows a system according to the present disclosure.

The manufacturing process 200 may comprise a mixing stage 210, a coating stage 220, a calendering stage 230, a slitting stage 240, and an electrode separation stage 250.

At each manufacturing stage a scanner (not shown in Fig. 6) may be used to scan the physical identifier and thus identify the respective electrode. Hence, each manufacturing stage may be equipped with a respective scanner.

Furthermore, a data storage device 260 may be used during the manufacturing process 200 for storing data.

The data storage device 260 may store measurement data of the manufacturing process associated with a physical identifier. The data storage device 260 may e.g., comprise a respective database which contains the measurement data.

For example, the data storage device 260 may store measurement data for each electrode together with an electronic (i.e., digital) ID (i.e., identifier) of the respective electrode. The electronic ID may be a predefined value (e.g., a number) which may be associated to a DMC (data matrix code, which forms the physical identifier). Both the electronic ID and the physical identifier may be stored together in a library. Thus, it is merely necessary to scan the physical identifier and identify it in the library, in order to determine the associated electronic ID. The library may also be stored in the data storage device 260.

The data storage device 260 may hence store an electrode profile for each electrode. The electrode profile of an electrode may comprise the measurement data and the respective electronic ID.

Furthermore, the data storage device 260 may store a profile of a battery cell. The battery cell may comprise a stack or plurality of electrodes. Accordingly, the cell profile may comprise (or be associated with) the measurement data of the electrodes. In one example, the cell profile may store or associated with the electronic IDs of its electrodes. In this way, it becomes possible to obtain of each of its electrodes the respective measurement data from the data storage device.

The cell profile may be associated for providing characteristics of the cell with the physical cell identifier for identifying the cell, providing the cell with the physical cell identifier, associating the electrode profiles of the electrodes with the cell profile.

During the coating stage 220, a laser or inkjet may be used to provide each electrode of an electrode tape 400 with a physical identifier. In this regard it is also referred to fig. 7 which shows the electrode tape 400 in more detail. The physical identifier may relate to the subsequent coated electrodes shape. The physical identifier may be applied directly after the coating itself at the uncoated part of the electrode.

The physical identifier may be positioned in a peripheral area of the electrode.

During the coating stage 220, the calendering stage 230, and the slitting stage 240 (or at the end of each stage) measurement data 310 of the respective stage may be obtained.

In particular the measurement data may be obtained in a true-to-position measurement method. Accordingly, the measurement data can be reliably and unambiguously assigned to their respective section of the electrode tape (i.e., the section where the measurement data have been taken and thus where the respective electrode is located).

Measurement data of the manufacturing process may comprise an electrode basis weight, an electrode coating thickness, an electrode density, and/or an electrode defect.

The measurement data may be sent to and stored in the data storage device 260.

Based on the measurement data of at least one stage, an electrode may be evaluated. For example, it may be determined on this basis whether the electrode fulfills predefined criteria (e.g., quality criteria or other predefined electrode specifications) or not. The electrode may thus be classified as "good" or "not good". Moreover, the electrodes may be classified according to different tolerance groups based on the measurement data.

As indicated by reference number 320, the "not good" electrodes which do not fulfill the predefined criteria may be removed. For example, the "not good" electrodes may be removed at the electrode separation stage 250, i.e., after separation of the electrodes.

Accordingly, the system of the present disclosure may obtain measurement data along the electrode manufacturing process chain and assigns the measurement data to a specific code (i.e., the physical identifier) on the electrode. This code always refers to a definite electrode sheet size. Thus, after separation, a collected data set can be directly assigned to an electrode sheet. The measurement data of an electrode may be classified for evaluation (e.g., good / not good). If the codes are read during the following stack assembly, each electrode sheet can be directly assigned to a cell at the end. This supports material and process data tracking.

It is however noted that due to the electrode balancing approach provided by the method of the present disclosure, also electrodes deviating from the target specifications may still be used. Hence, there are even less "not good" electrodes.

Fig. 7 shows an example of a set of electrodes, i.e., of an electrode tape 400.

The electrode sheet 400 comprises a plurality of electrodes 410. Each electrode comprises a physical identifier 420 at a peripheral area 411 of the electrode tape.

The peripheral area may be adjacent to an electrode tab 412 of the electrode 410.

The peripheral area may be an area that is not used operatively in the cell, which e.g., is not coated with an active material in the coating stage.

The peripheral area comprising the physical identifier of the electrode may be removed as a last step of the manufacturing process and before qualified electrodes are assembled in a battery cell. Accordingly, since the physical identifier is kept until it is determined which electrodes are used in a battery cell, the physical identifiers and thus the electronic IDs of the used electrodes may be assigned to the cell profile. In other words, even if the physical identifiers may not be present anymore in the cell, the measurement data of the electrodes used in the cell can still be unambiguously identified in the data storage device.

For example, the battery cell may be provided with a physical cell identifier, e.g., by laser or inkjet or in form of an electronic code, an electronic code stored in a data storage of the cell, etc.. The physical cell identifier in return may be associated with the cell profile. Accordingly, by reading the physical cell identifier the measurement data of the electrodes used in the cell may be obtained.

It may also be possible that the measurement data of the used electrodes are locally stored in the battery cell.

Throughout the description, including the claims, the term "comprising a" should be understood as being synonymous with "comprising at least one" unless otherwise stated. In addition, any range set forth in the description, including the claims should be understood as including its end value(s) unless otherwise stated. Specific values for described elements should be understood to be within accepted manufacturing or industry tolerances known to one of skill in the art, and any use of the terms "substantially" and/or "approximately" and/or "generally" should be understood to mean falling within such accepted tolerances.

Although the present disclosure herein has been described with reference to particular examples, it is to be understood that these examples are merely illustrative of the principles and applications of the present disclosure.

It is intended that the specification and examples be considered as exemplary only, with a true scope of the disclosure being indicated by the following claims.

## Claims

1. A computer-implemented method of determining an electrode assembly for a battery cell, the method comprising:
providing a plurality of electrode profiles, each electrode profile being associated with an electrode and comprising measurement data of a manufacturing process of the electrode,
providing a target cell property of the battery cell,
inputting the electrode profiles of the plurality of electrodes and the target cell property into an algorithm, wherein in response the algorithm:
determines an electrode assembly according to which the electrodes are to be assembled.

2. The method of claim 1, wherein
determining the electrode assembly comprises:
selecting only some of the plurality of electrodes, and
determining an electrode assembly according to which the selected electrodes are to be assembled, and/or
determining the electrode assembly comprises:
determining an order and/or orientation of the electrodes in the electrode assembly such that an actual cell property of the battery cell approximates the target cell property.

3. The method according to claim 1 or 2, wherein
determining the electrode assembly comprises:
classifying the electrodes into a plurality of classes as a function of their respective measurement data, and
determining the electrode assembly as a function of the classes attributed to the electrodes.

4. The method according to any one of the preceding claims, wherein
the electrode assembly comprises at least one pair of electrodes being an anode and a cathode, wherein
the electrodes of the pair are optionally selected as a function of their classes.

5. The method according to the preceding claim, wherein
the electrodes of the pair are selected such that their measurement data approximate each other or are within a predefined tolerance range in relation to each other.

6. The method according to any one of the preceding claims 4 to 5, wherein
the electrodes of the pair are selected such that an electrode coating thickness of the anode is thicker than that one of the cathode, optionally within a predefined tolerance range.

7. The method according to any one of the preceding claims, wherein
the electrode assembly is an electrode stack and/or a predefined arrangement of electrodes, wherein the positioning of the single electrodes is determined by the algorithm.

8. The method according to any one of the preceding claims, wherein
the target cell property comprises at least one of:
a predefined cell performance,
a maximum capacity of the battery cell, and
a maximum performance of the battery cell.

9. The method according to any one of the preceding claims, wherein
the measurement data of the manufacturing process comprise at least one of:
an electrode basis weight,
an electrode area loading
an electrode coating thickness,
an electrode density, and/or
an electrode defect.

10. The method according to any one of the preceding claims, wherein
the algorithm comprises at least one machine-learning model, optionally a pre-trained and/or fine-tuned machine-learning model.

11. The method according to any one of the preceding claims, further comprising: determining for each electrode an electrode profile, comprising:
associating an electrode profile for providing characteristics of the electrode with a physical identifier for identifying the electrode,
providing the electrode with the physical identifier,
obtaining measurement data at at least one manufacturing stage of the manufacturing process, and
associating the measurement data with the electrode profile.

12. The method according to any one of the preceding claims, wherein
the manufacturing process is configured for manufacturing at least one first batch of electrodes of an anode type and at least one second batch of electrodes of a cathode type, wherein the method further comprises:
inputting the electrode profiles of the first and second sets and the target cell property into an algorithm, wherein in response the algorithm:
determines one or several electrode assemblies according to which the electrodes of the first and second set are to be assembled

13. A method of manufacturing an electrode assembly for a battery cell, the method comprising:
determining the electrode assembly according to any one of the preceding claims, and
assembling the electrode assembly.

14. An energy storage device comprising an electrode assembly manufactured according to the preceding claim.

15. A computer program comprising instructions which, when the program is executed by a computer, cause the computer to carry out the method according to any one of the preceding method claims.
